# EUROPÄISCHE PATENTSCHRIFT

(11) **EP 1 016 873 B1**
(45) Veröffentlichungstag und Bekanntmachung des Hinweises auf die Patenterteilung: **10.12.2008**
(21) Anmeldenummer: 99125849.2
(22) Anmeldetag: 24.12.1999
(51) Int. Cl.: G01S 7/40, G01S 13/93, G01B 11/27

(54) **Einstellvorrichtung zum Justieren eines an einem Fahrzeug montierten Abstandssensors oder Scheinwerfers**
Adjustment device for a distance measurement or lighting unit mounted on a vehicle
Dispositif d'ajustement d'un télémètre ou phare monté dans un véhicule

(30) Priorität: 02.01.1999 DE 19900018; 17.06.1999 DE 19927573
(43) Veröffentlichungstag der Anmeldung: 05.07.2000
(73) Patentinhaber: ROBERT BOSCH GMBH, 70442 Stuttgart (DE)
(72) Erfinder: Adolph, Dietrich, 73095 Albershausen (DE); Mayer, Gerhard, 73037 Göppingen (DE); Probst, Christoph, 73230 Kirchheim (DE); Haaga, Gerhard, 73275 Ohmden (DE); Nobis, Günter, 73240 Wendlingen (DE); Romuald, Gustain, 73207 Plochingen (DE)

(56) Entgegenhaltungen:
- DE-A- 2 641 878
- DE-A- 19 707 590
- FR-A- 2 274 908
- US-A- 2 979 983

## Beschreibung

### Stand der Technik

Die Erfindung bezieht sich auf eine Einstellvorrichtung zum Justieren eines an einem Fahrzeug montierten Abstandssensors oder Scheinwerfers mit einem Einstellgerät, das einen an einem quer zur Fahrtrichtung des Fahrzeuges bewegbaren Tragegestell angebrachten, bezüglich des Tragegestelles zumindest in horizontaler Richtung verschwenkbaren planen Reflektor aufweist.

Eine derartige Einstellvorrichtung ist in der DE 197 07 590 A1 angegeben. Bei dieser bekannten Einstellvorrichtung wird ein Einstellgerät für einen Radar-Abstandssensor mittels einer Peileinheit auf Symmetrieachsen der Fahrzeug-Karosserie eingestellt. In der Regel weicht die Karosserieachse von der Fahrachse des Kraftfahrzeuges um einen gewissen Winkel ab, der meist kleiner als 0,5° ist, in Einzelfällen aber auch bis zu einigen Grad betragen kann. Da die Messung mit dem Abstandssensor empfindlich von seiner richtigen Justierung abhängt, können sich durch die Einstellung auf die Karosserieachse wesentliche Fehlmessungen ergeben. Zum Justieren des Einstellgerätes wird das Sensorsignal in Form eines Radarsignals auf einen in einem gewissen Abstand vor dem Abstandssensor angeordneten, in der Regel planen Reflektor gerichtet und das von dem Reflektor zurückgeworfene Signal mit dem Empfänger des Sensors und einer Auswerteeinrichtung erfaßt, um die richtige Ausrichtung des Abstandssensors aufgrund der erfaßten Signale des Richtdiagrammes in Form der Radarkeule zu bestimmen und erforderlichenfalls zu justieren. Hierzu kann beispielsweise auf das Maximum der Radarkeule justiert werden oder aber auf außerhalb des Maximums liegende ausgeprägte Symmetriepunkte.

Wie auch in der nicht vorveröffentlichten deutschen Patentanmeldung Nr. 199 00 018.2-31 ausgeführt, kann die Fahrachse aus den Einzelspuren der Räder der ungelenkten Fahrzeugachse, in der Regel der Hinterachse, durch Mittelung bestimmt werden, d.h. sie ist die Winkelhalbierende der beiden Einzelspuren. In dieser Druckschrift ist vorgeschlagen, die Einzelspuren mittels an den beiden ungelenkten Rädern angebrachter Lichtprojektoren zu bestimmen, wobei zwei quer zur Fahrtrichtung des Fahrzeuges angeordnete Markierungsskalen vorgesehen sind und die Schnittpunkte der Einzelspuren mit den Markierungsskalen abgelesen werden, um daraus die Fahrachse zu bestimmen.

Eine weitere Einstellvorrichtung, in der noch weitere Erläuterungen zur Justierung des Abstandssensors und zu einem Einstellgerät gemacht sind, ist in der weiteren, nicht vorveröffentlichten deutschen Patentanmeldung Nr. 198 40 307 der Anmelderin angegeben. Weitere Einzelheiten des Einstellgerätes und der Vorgehensweise bei der Einstellung können dieser Anmeldung entnommen werden.

Der Erfindung liegt die Aufgabe zugrunde, eine Einstellvorrichtung der eingangs angegebenen Art bereit zu stellen, mit der bei einfachem Aufbau und einfacher Handhabung eine genaue Justierung des Abstandssensors oder Scheinwerfers vorgenommen werden kann.

Diese Aufgabe wird mit den Merkmalen des Anspruches 1 gelöst. Mit der Bestimmungsvorrichtung wird eine Einstellung der Abstrahlcharakteristik des Abstandssensors auf die Fahrachse und damit eine für die Fahrsicherheit zuverlässige Justierung erzielt. Die Ermittlung der Fahrachse erfolgt dabei mit einfachen Maßnahmen mit Hilfe der an den beiden Rädern der ungelenkten Radachse anbringbaren Lichtprojektionseinrichtung, dem horizontal verschwenkbaren Reflektor, der auf einfache Weise senkrecht auf den Lichtstrahl der Lichtprojektionseinrichtung einstellbar ist, um die der Richtung des Lichtstrahls entsprechende jeweilige Einzelspur zu bestimmen, und des quer zur Fahrtrichtung, d.h. dem auf den Meßplatz eingefahrenen Fahrzeug, bewegbaren Tragegestells des Einstellgerätes, wobei das Tragegestell geradlinig, z.B. auch parallel versetzt, in die Positionen vor den beiderseitigen Lichtprojektionseinrichtungen und schließlich in die Position vor dem Abstandssensor bewegt werden kann. Die Fahrachse ist dabei einfach als Mittelwert der den beiden Einzelspuren entsprechenden Schwenkwinkel des Reflektors z.B. "von Hand" oder automatisch bestimmbar, wobei der Reflektor ebenfalls einfach auf diesen mittleren Schwenkwinkel eingestellt werden kann, um die Justierung des Abstandssensors durchzuführen,

Zur einfachen, gut handhabbaren Ausbildung der Einstellvorrichtung trägt dabei die Maßnahme bei, dass die Lichtprojektionseinrichtung einen Laserprojektor aufweist.

Mit den Maßnahmen, dass an der Lichtprojektionseinrichtung eine Markierung angeordnet ist, mit der ablesbar ist, ob der Lichtstrahl in seiner Einfallsrichtung auf den Reflektor von diesem zurückgeworfen wird, wird die senkrechte Ausrichtung des Reflektors bezüglich des von der Lichtprojektionseinrichtung abgegebenen Lichtstrahls einstellbar. Die Markierung kann z.B. eine vertikale Linie auf der Lichtprojektionseinrichtung sein. Fällt nun der von dem Reflektor zurück geworfene Lichtstrahl auf diese Linie, so ist der Reflektor senkrecht zu dem ankommenden Lichtstrahl und damit zur entsprechenden Einzelspur ausgerichtet.

Eine gute Reflektion des Lichtstrahls und gleichzeitig auch der von dem Abstandssensor abgegebenen Strahlung, insbesondere einer Radarstrahlung, wird dadurch erzielt, dass der Reflektor als mit einer metallischen Beschichtung versehener Glasspiegel ausgebildet ist. Durch diese Ausbildung des Reflektors wird auch eine dauerhaft gute Planheit sichergestellt.

Zum einfachen Ablesen und Einstellen der Schwenkwinkel bzw. der damit verbundenen Einzelspuren und der Fahrachse sind weiterhin die Maßnahmen geeignet, dass die Anzeigeeinheit eine an dem Tragegestell angebrachte Skala und einen auf diese gerichteten, mit dem Reflektor verbundenen mechanischen oder optischen Zeiger aufweist oder dass die Anzeigeeinheit elektronisch mit einem geeigneten Geber und mit digitaler Anzeige ausgebildet ist. Außer "von Hand" kann zur Ermittlung der Fahrachse vorgesehen sein, dass der der Fahrachse entsprechende Schwenkwinkel des Reflektors aus den Schwenkwinkeln der beiden Spurrichtungen automatisch bestimmt wird.

Die Erfindung wird nachfolgend anhand eines Ausführungsbeispiels unter Bezugnahme auf die Zeichnungen näher erläutert. Es zeigen:
- Fig. 1: eine schematische seitliche Ansicht zur Anordnung einer Einstellvorrichtung zur Justierung eines Abstandssensors,
- Fig. 2: eine schematische Darstellung zur Justierung eines Abstandssensors in Draufsicht und
- Fig. 3: einen Ausschnitt X der Fig. 2, die eine Anzeigeeinheit zum Ablesen eines Schwenkwinkels eines Reflektors vergrößert wiedergibt.

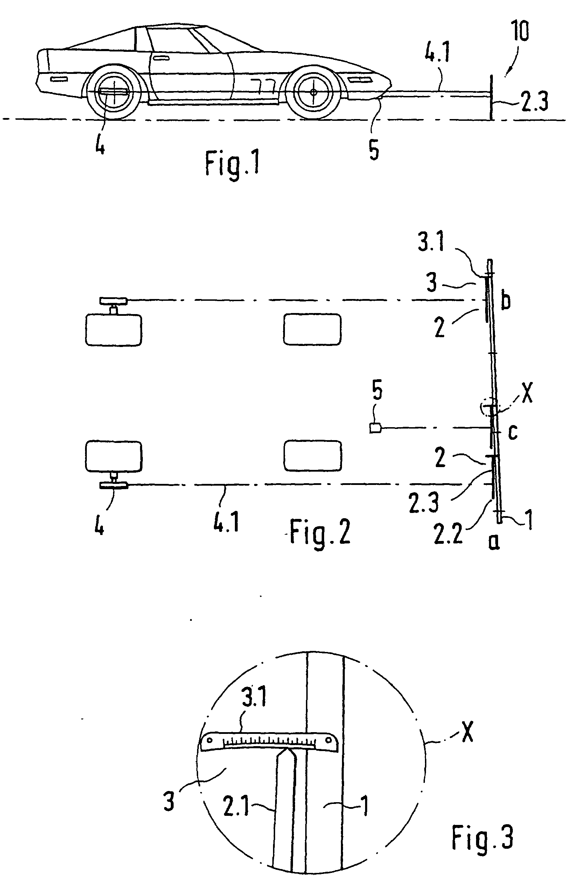

In Fig. 1 ist ein Kraftfahrzeug mit einem Abstandssensor 5, z.B. einem Radarabstandssensor, schematisch dargestellt. Der Abstandssensor 5 wird mit Hilfe eines z.B. im Bereich zwischen einem und zwei Metern vor dem Fahrzeug senkrecht angeordneten Reflektors 2.3 justiert, wozu der Reflektor 2.3 zuvor senkrecht zur Fahrachse des Kraftfahrzeuges ausgerichtet wird. Zur Ausrichtung sind an den beiden Rädern der ungelenkten Achse, vorliegend der Hinterachse, auf der Außenseite der Räder Projektoren einer Lichtprojektionseinrichtung 4 zur Abgabe eines Lichtstrahls 4.1 an den Rädern oder den Radaufnahmen mit an sich bekannten Befestigungsmitteln angebracht, während der Reflektor 2.3 zur Bestimmung der Einzelspuren der beiden Räder in den Strahlengang des nach vorne gerichteten Lichtstrahls 4.1 gebracht wird, wie aus Fig. 2 ersichtlich.

Die Fig. 2 zeigt in Draufsicht die Anordnung des Reflektors 2.3 in Positionen a und b im Strahlengang vor den beiden Projektoren sowie in einer Position c vor dem Abstandssensor 5 zu dessen Justierung. Der Reflektor 2.3 ist an einem Tragegestell 2 eines Einstellgerätes 10 in horizontaler Richtung um eine Schwenkachse 2.2 auch bei geringfügig (z.B. einige Grade) schräg eingefahrenen Fahrzeug soweit in beiden Richtungen verschwenkbar, dass der auf ihn auftreffende Lichtstrahl in seiner Einfallsrichtung zurückgeworfen wird, d.h. in horizontaler Richtung senkrecht zu dem Lichtstrahl 4.1 ausgerichtet ist. Zur genauen Ausrichtung ist an der Lichtprojektionseinrichtung 4 eine durch den Lichtaustrittspunkt verlaufende Markierung in Form einer geraden Linie vorgesehen, mit der der zurückgeworfene Lichtstrahl zur Deckung gebracht wird. In vertikaler Richtung kann der Lichtstrahl hierbei etwas verschwenkt sein. Auch die Anordnungshöhe des Reflektors in den Positionen a, b und c kann unterschiedlich sein. Da der Lichtstrahl 4.1 in Richtung der Einzelspur zeigt, ist der Reflektor 2.3 in horizontaler Richtung senkrecht zu der betreffenden Einzelspur ausgerichtet. Zum Verschieben des Reflektors 2.3 in die jeweiligen Positionen a, b, c ist das Tragegestell 2 an einem Führungsmittel 1, das z.B. in einer auf dem Boden des Prüfplatzes montierten Führungsschiene besteht oder an der Decke des Prüfplatzes angebracht ist und quer zu der Längsachse des Fahrzeuges verläuft, geradlinig verstellbar. Das Fahrzeug wird im Wesentlichen senkrecht zu dem Führungsmittel 1 auf den Prüfplatz eingefahren, wobei die Richtung der Fahrzeuglängsachse von der Senkrechten des Führungsmittels 1 jedoch im Rahmen der üblichen Fahrgenauigkeiten bis zu einigen Grad abweichen darf.

Diese Abweichung kann durch die horizontale Verschwenkung des Reflektors 2.3 um die Schwenkachse 2.2 ohne weiteres ausgeglichen werden, ebenso wie eine Abweichung der Einzelspuren von der Senkrechten zur Führungsschiene.

In Fig. 3 ist eine Anzeigevorrichtung 3 mit einer Skala 3.1 und einem Zeiger 2.1 als Einzelheit X der Fig. 2 näher dargestellt. Die Skala 3.1 ist dabei an dem Tragegestell 2, das entlang des Führungsmittels 1 bzw. der Führungsschiene geradlinig verstellbar ist, fest angeordnet, während der Zeiger 2.1 bezüglich des Reflektors 2.3 fest angebracht ist und mit diesem verschwenkt wird. Die Schwenkrichtungen des Reflektors 2.3 in den Verschiebepositionen a und b vor den beiden Projektoren kann dann ohne weiteres an der Skala 3.1 abgelesen werden, so dass die entsprechenden Schwenkstellungen und damit die Einzelspuren als Winkel abgelesen werden können. Die Fahrachse ergibt sich nun als Mittelwert der beiden Schwenkwinkel. Der Reflektor wird in dieser Weise senkrecht bezüglich der Fahrachse eingestellt und anschließend in dieser Einstellung in die Position c vor den Abstandssensor 5 verschoben, um die Justierung des Abstandssensors 5 durchzuführen, wie z.B. in den in der Beschreibungseinleitung genannten Druckschriften näher beschrieben.

Das Einstellgerät 10 sowie das Tragegestell 2 sind vorliegend nur schematisch dargestellt. Der Aufbau des Einstellgerätes 10 mit dem Tragegestell 2 kann zur vertikalen Verschwenkung des Reflektors 2.3 entsprechend dem in der Beschreibungseinleitung beschriebenen Stand der Technik ausgebildet sein. Als Reflektor 2.3 wird eine plane Platte verwendet, die vorliegend z.B. als metallbeschichtete Glasplatte ausgebildet ist, so dass nicht nur eine gute Ebenheit, sondern auch eine gute Reflektion des Lichtstrahls 4.1 und auch der von dem Abstandssensor 5 kommenden Strahlung erreicht werden.

Mit den beschriebenen Maßnahmen wird bei einfachem Aufbau der Einstellvorrichtung die Fahrachse auf einfache Weise ermittelbar und anschließend der Abstandssensor ebenfalls mit einfachen Maßnahmen auf die Fahrachse justierbar.

## Patentansprüche

1. Einstellvorrichtung zum Justieren eines an einem Fahrzeug montieren Abstandssensors (5) oder Scheinwerfers mit einem Einstellgerät (10), das einen an einem quer zur Fahrtrichtung des Fahrzeuges bewegbaren Tragegestell (2) angebrachten, bezüglich des Tragegestelles (2) zumindest in horizontaler Richtung verschwenkbaren planen Reflektor (2.3) aufweist,
**dadurch gekennzeichnet,**
**dass** zum Ermitteln der Fahrachse des Fahrzeuges eine Bestimmungsvorrichtung vorgesehen ist, die eine an den beiden gegenüberliegenden ungelenkten Rädern einer Radachse anbringbare Lichtprojektionseinrichtung (4) aufweist, welche in Spurrichtung jedes der beiden Räder einen Lichtstrahl (4.1) auf den in dessen Strahlengang gebrachten Reflektor (2.3) abgibt, wozu das Tragegestell (2) entlang eines Führungsmittels (1) geradlinig quer zur Fahrtrichtung bewegbar ist,
**dass** der Reflektor (2.3) horizontal in beiden Richtungen aus der Richtung quer zur Fahrtrichtung heraus soweit verschwenkbar ist, dass der Lichtstrahl (4.1) senkrecht auf den Reflektor (2.3) auftrifft,
**dass** das Einstellgerät (10) eine Anzeigeeinheit (3) aufweist, mit der horizontale Schwenkwinkel des Reflektors (2.3) ablesbar sind,
**dass** die Fahrachse als Mittelwert der beiden den jeweiligen Spurrich-tungen entsprechenden Schwenkwinkel bestimmbar ist, und
**dass** der Reflektor (2.3) in dem der Fahrachse entsprechenden Schwenkwinkel senkrecht zur Fahrachse einstellbar und durch geradlinige Bewegung entlang des Führungsmittels in den Abstrahlungsbereich des Abstandssensors (5) oder des Scheinwerfers zu dessen Justierung bringbar ist.

2. Einstellvorrichtung nach Anspruch 1,
**dadurch gekennzeichnet,**
**dass** die Lichtprojektionseinrichtung (4) einen Laserprojektor aufweist.

3. Einstellvorrichtung nach Anspruch 1 oder 2,
**dadurch gekennzeichnet,**
**dass** an der Lichtprojektionseinrichtung (4) eine Markierung angeordnet ist, mit der ablesbar ist, ob der Lichtstrahl in seiner Einfallsrichtung auf den Reflektor (2.3) von diesem zurückgeworfen wird.

4. Einstellvorrichtung nach einem der vorhergehenden Ansprüche,
**dadurch gekennzeichnet,**
**dass** der Reflektor (2.3) als mit einer metallischen Beschichtung versehener Glasspiegel ausgebildet ist.

5. Einstellvorrichtung nach einem der vorhergehenden Ansprüche,
**dadurch gekennzeichnet,**
**dass** die Anzeigeeinheit (3) eine an dem Tragegestell angebrachte Skala (3.1) und einen auf diese gerichteten, mit dem Reflektor (2.3) verbundenen Zeiger (2.1) aufweist oder
**dass** die Anzeigeeinheit elektronisch mit digitaler Anzeige ausgebildet ist.

6. Einstellvorrichtung nach Anspruch 5,
**dadurch gekennzeichnet,**
**dass** der der Fahrachse entsprechende Schwenkwinkel des Reflektors (2.3) aus den Schwenkwinkeln der beiden Spurrichtungen automatisch bestimmt wird.

## Claims

1. Adjustment device for adjusting a distance sensor (5) or headlight mounted on a vehicle, using an adjustment unit (10) which has a planar reflector (2.3) which is mounted on a supporting frame (2) which can move transversely with respect to the direction of travel of the vehicle, and which reflector (2.3) can pivot at least in the horizontal direction with respect to the supporting frame (2), **characterized in that** a determining device is provided to determine the travel axis of the vehicle, which has a light projection device (4) which can be attached to the two non-steered wheels of a wheel axle which lie opposite one another, which light projection device (4) outputs, in the wheel track direction of each of the two wheels, a light beam (4.1) on to the reflector (2.3) which is mounted in its beam path, for which purpose the supporting frame (2) can be moved linearly along a guide means (1), transversely with respect to the direction of travel,
**in that** the reflector (2.3) can be pivoted horizontally in both directions out of the direction which is transverse with respect to the direction of travel to such an extent that the light beam (4.1) impinges perpendicularly on the reflector (2.3),
**in that** the setting unit (10) has a display unit (3) on which the horizontal pivoting angle of the reflector (2.3) can be read,
**in that** the travel axis can be determined as a mean value of the two pivoting angles which correspond to the respective wheel track directions, and
**in that** the reflector (2.3) can be set perpendicular to the travel axis at the pivoting angle which corresponds to the travel axis and, after a linear movement along the guide means, it can be placed in the radiation area of the distance sensor (5) or the headlight in order to adjust the latter.

2. Adjustment device according to Claim 1,
**characterized**
**in that** the light projection device (4) has a laser projector.

3. Adjustment device according to Claim 1 or 2,
**characterized**
**in that** a mark which can be used to determine whether the light beam is reflected by the reflector (2.3) in its direction of incidence on to the reflector (2.3) is arranged in the light projection device (4).

4. Adjustment device according to one of the preceding claims,
**characterized**
**in that** the reflector (2.3) is embodied as a glass mirror which is provided with a metallic coating.

5. Adjustment device according to one of the preceding claims,
**characterized**
**in that** the display unit (3) has a scale (3.1) which is provided on the supporting frame and a pointer (2.1) which is directed at the latter and is connected to the reflector (2.3), or
**in that** the display unit is embodied electronically with a digital display.

6. Adjustment device according to Claim 5,
**characterized**
**in that** the pivoting angle of the reflector (2.3) which corresponds to the travel axis is determined automatically from the pivoting angles of the two wheel track directions.

## Revendications

1. Dispositif de réglage pour ajuster un capteur de distance (5) ou un projecteur installé sur un véhicule à l'aide d'un appareil de réglage (10) comportant un réflecteur plan (2.3) installé sur un châssis de support (2) mobile transversalement à la direction de déplacement du véhicule, et qui peut basculer au moins dans la direction horizontale par rapport au châssis de support (2),
**caractérisé en ce que**
- pour déterminer l'axe de conduite du véhicule automobile, il est prévu un dispositif de détermination qui comporte une installation de projection lumineuse (4) pouvant être prévue sur les deux roues non directrices opposées d'un essieu, et qui émet un faisceau lumineux (4.1) dans la direction de la voie de chacune des deux roues vers le réflecteur (2.3) installé dans le trajet du faisceau,
- le châssis de support (2) est mobile le long d'une ligne droite suivant le moyen de guidage (1), transversalement à la direction de déplacement,
- le réflecteur (2.3) peut être dégagé suffisamment, par pivotement horizontal dans les deux directions hors de la direction transversale à la direction de conduite, pour que le faisceau lumineux (4.1) arrive perpendiculairement sur le réflecteur (2.3),
- l'appareil de réglage (10) comporte une unité d'affichage (3) permettant de lire les angles de pivotement horizontal du réflecteur (2.3),
- l'axe de conduite est défini comme valeur moyenne des deux angles de pivotement correspondants aux directions de déplacement respectives, et
- le réflecteur (2.3) se règle selon l'angle de pivotement correspondant à l'axe de déplacement, perpendiculairement à cet axe de déplacement et on en assure l'ajustage par un mouvement rectiligne le long du moyen de guidage, dans la zone de sortie de rayonnement du capteur de distance (5) ou du projecteur (8).

2. Dispositif de réglage selon la revendication 1,
**caractérisé en ce que**
l'installation de projection de lumière (4) comporte un projecteur laser.

3. Dispositif de réglage selon la revendication 1 ou 2,
**caractérisé en ce que**
l'installation de projection de lumière (4) comporte un marquage qui permet de lire si le faisceau lumineux, dans sa direction incidente, est renvoyé vers le réflecteur (2.3).

4. Dispositif de réglage selon les revendications précédentes,
**caractérisé en ce que**
le réflecteur (2.3) est réalisé sous la forme d'un miroir en verre muni d'un revêtement métallique.

5. Dispositif de réglage selon les revendications précédentes,
**caractérisé en ce que**
l'unité d'affichage (3) comporte une échelle (3.1) sur le châssis d'affichage et un index (2.1) dirigé vers l'échelle est relié au réflecteur (2.3), ou
l'unité d'affichage est réalisée de manière électronique avec un affichage numérique.

6. Dispositif de réglage selon la revendication 5,
**caractérisé en ce que**
l'angle de pivotement correspondant à l'axe de la chaussée pour le réflecteur (2.3) se définit de manière automatique à partir de l'angle de pivotement des deux dispositifs de blocage.
